# FASCICULE DE BREVET EUROPEEN

(11) **EP 0 467 790 B1**
(45) Date de publication et mention de la délivrance du brevet: **07.09.1994**
(21) Numéro de dépôt: 91402012.8
(22) Date de dépôt: 18.07.1991
(51) Int. Cl.: C08L 95/00

(54) **Procédé pour préparer en émulsion aqueuse un liant bitume/polymère à structure polymérique tridimensionelle continue et application de ce liant à la réalisation de revêtements ou d'enrobés**
Verfahren zur Herstellung eines eine durchgehende dreidimensionale Polymerstruktur aufweisenden Bitumen/Polymer-Bindemittels und Verwendung desselben in Überzugsmitteln oder Strassendeckenmischungen
Method for preparing in aqueous emulsion a bitumen/polymer binder with a continuous three-dimensional polymeric structure and use of this binder for making coatings or mixtures for road surfacing

(30) Priorité: 20.07.1990 FR 9009276
(43) Date de publication de la demande: 22.01.1992
(73) Titulaire: ELF ANTAR FRANCE, 92400 Courbevoie (FR)
(72) Inventeur: Chaverot, Pierre, F-69600 Oullins (FR); Demangeon, Francis, F-69570 Dardilly (FR)
(74) Mandataire: Boillot, Marc

(56) Documents cités:
- EP-A- 0 367 638
- WO-A-89/12079
- DE-A- 3 830 679

## Description

L'invention concerne un procédé pour préparer en émulsion aqueuse un liant bitume/polymère à structure polymérique tridimensionnelle continue. Elle a trait également à l'application de ce liant à la réalisation de revêtements et en particulier de revêtements superficiels routiers, d'enrobés mis en place à chaud ou à froid ou encore de revêtements d'étanchéité.

L'utilisation de liants bitumineux soit dans les revêtements d'entretien en enduit superficiel ou en enrobé très mince, soit en couche de structure en enrobé plus épais, n'est possible que si ces liants possèdent les qualités requises d'élasticité et de plasticité.

Les liants routiers consistant en bitumes classiques ne conservent pas une élasticité suffisante et présentent un intervalle de plasticité trop étroit. On sait que l'on peut améliorer fortement les caractéristiques de tels liants routiers en leur incorporant un polymère de type élastomérique, qui peut être tel que caoutchouc butyle, polybutadiène, polyisoprène, polyisobutène, copolymère éthylène/acétate de vinyle, polyacrylate, polyméthacrylate, polychloroprène, polynorbornène, terpolymère éthylène/propylène/diène (EPDM) et avantageusement copolymère statistique ou séquencé de styrène et d'un diène conjugué, les liants modifiés ainsi obtenus étant couramment dénommés liants bitume/polymère.

Pour caractériser les qualités des liants bitumineux, on fait généralement appel aux grandeurs suivantes :
. pénétration, exprimée en 1/10 de mm et déterminée selon la norme NF T 66004 ;
. point de ramollissement bille et anneau, exprimé en °C et déterminé selon la norme NF T 66008 ;
. point de fragilité FRAASS, exprimé en °C et déterminé selon la norme IP 80/53.

L'écart de température entre le point de FRAASS et le point de ramollissement bille et anneau définit l'intervalle de plasticité du liant bitumineux.

Les liants du type bitume/polymère peuvent, de plus, être caractérisés par des essais rhéologiques en traction selon la norme NF T 46002 permettant la détermination des grandeurs ci-après :
. contrainte au seuil (σs), exprimée en bars
. allongement au seuil (εs), exprimé en %
. contrainte à la rupture (σr), exprimée en bars
. allongement à la rupture (εr), exprimé en %
On sait qu'une augmentation des propriétés élastiques des liants bitumineux entraîne une amélioration de la résistance à l'arrachement des granulats des enduits superficiels ainsi qu'une amélioration de la résistance à la fissuration de fatigue ou à la fissuration de retrait thermique des enrobés. De plus une valeur du point de ramollissement bille et anneau du liant supérieure aux températures maximales (environ 60°C à 70°C) rencontrées sur la chaussée permet de lutter efficacement contre le fluage permanent conduisant à l'ornièrage des enrobés et contre la remontée des liants sur les enduits superficiels conduisant au phénomène de ressuage. Les deux premiers points cités sont très importants au plan économique car ils sont à l'origine de la dégradation de la structure et de la qualité de portance de la chaussée. Les deux derniers points sont quant à eux reliés à l'important problème de la sécurité lié à la rugosité superficielle et à la régularité de surface de la couche de roulement.

Les liants bitumineux, même du type bitume/polymère, utilisés à l'heure actuelle dans les applications routières ne possèdent pas les caractéristiques optimales qui permettraient de répondre aux exigences précitées.

On sait produire des liants bitumineux présentant de telles caractéristiques optimales, pour des applications en étanchéité, par incorporation d'un polymère, en quantité supérieure à 10% en poids, à un mélange de bitume de distillation directe et de bitume oxydé. De tels liants bitumineux utilisés dans l'industrie de l'étanchéité ne peuvent pas être employés dans les techniques de construction routière et d'entretien routier essentiellement à cause de leur viscosité trop importante.
Il n'est en effet pas possible de répandre une couche régulière d'un tel liant pour réaliser un enduit superficiel en faisant appel aux techniques de répandage connues à ce jour pour les applications à chaud. En outre, la formation du film de liant permettant l'enrobage des granulats en centrale d'enrobage à chaud n'est également pas possible du fait de la très forte viscosité du liant. Enfin, le moyen d'abaisser cette viscosité importante du liant par le biais d'une mise en émulsion n'est pas non plus envisageable avec la technologie permettant des cadences de production compatibles avec la réalité de la construction routière et de l'entretien routier.

Selon l'invention, on a trouvé un procédé permettant de préparer en émulsion aqueuse un liant bitumineux du type bitume/polymère, qui, d'une part, possède une structure polymérique tridimensionnelle continue conférant au liant des valeurs élevées de viscosité, d'élasticité et de point de ramollissement bille et anneau rapprochant ce liant des liants bitumineux produits pour une utilisation en étanchéité et qui, d'autre part, ne présente pas les inconvénients de mise en oeuvre de ces liants employés en étanchéité.

En particulier, les propriétés élastiques améliorées du liant bitume/polymère produit selon l'invention confèrent aux enrobés fabriqués en utilisant ce liant une résistance nettement améliorée en fatigue. En outre, la valeur élevée du point de ramollissement bille et anneau du liant permet de diminuer considérablement l'ornièrage des chaussées ralisées à partir de ce liant. Enfin, ledit liant possède une très forte cohésion qui permet de produire des enduits superficiels de caractéristiques satisfaisantes même aux très fortes granulométries, par exemple 10/14mm, des granulats associés au liant.

La citation WO-A-8912079, qui a pour objet la préparation d'une composition bitume/caoutchouc réticulée au soufre, enseigne, entre autres, un procédé de production d'une émulsion aqueuse de ladite composition. Ce procédé consiste (cf. exemple 3) à produire une phase bitumineuse consistant en la composition bitume/caoutchouc réticulée au soufre, à former une phase aqueuse renfermant un agent émulsifiant, et ensuite à émulsionner les deux phases précitées dans une proportion composition bitume/caoutchouc:eau égale à 70:30.

La citation DE-A-3830679 concerne un procédé de préparation d'émulsions aqueuses autoréticulables de bitume et de caoutchouc présentant des valeurs élevées d'élasticité. Dans ce procédé, on forme une émulsion aqueuse de bitume en émulsionnant, à température allant de 50°C à 70°C, un bitume ayant une température de 100°C à 150°C dans une bouillie aqueuse d'argile, ayant une température de 45°C à 60°C et renfermant, outre l'eau et l'argile, un alkylphénoléthoxylé, du soufre pulvérulent et un sel de zinc hydrosoluble. Puis, à l'émulsion de bitume ainsi produite, on incorpore successivement, sous agitation, les produits suivants : lessive de potasse, accélérateur de vulcanisation, agent stabilisant, latex de caoutchouc et charges minérales.

Le procédé selon l'invention pour préparer en émulsion aqueuse un liant bitume/polymère à structure polymérique tridimensionnelle continue, et du type dans lequel on amène à une zone de formation d'émulsion (i) une composante bitume/polymère consistant en un bitume renfermant 0,5 % à 15 %, et de préférence 1 % à 10 %, en poids du bitume, d'un polymère élastomérique réticulable au soufre et (ii) une phase aqueuse renfermant une quantité efficace d'un système émulsifiant, le rapport pondéral de la composante bitume/polymère à la phase aqueuse allant de 30:70 à 85:15 et de préférence de 50:50 à 80:20, et l'on maintient le milieu renfermant (i) et (ii) dans la zone de formation d'émulsion jusqu'à production d'une émulsion, ledit procédé se caractérisant en ce que la composante bitume/polymère est amenée à la zone de formation d'émulsion sous la forme d'une masse fondue ayant une température entre 100°C et 230°C, de préférence entre 120°C et 180°C, et possédant une viscosité d'au plus 2 Pa.s à ladite température, tandis que la phase aqueuse possède une température entre 10°C et 90°C et de préférence entre 20°C et 80°C, en ce que l'on amène également à la zone de formation d'émulsion (iii) un système de réticulation donneur de soufre en quantité propre à fournir 0,5 à 20 % et de préférence 1 à 15 % en poids de soufre par rapport au poids de polymère élastomérique apporté par la composante bitume/polymère, et en ce que le milieu réactionnel formé des constituants (i), (ii) et (iii) est maintenu dans ladite zone à une température appropriée comprise entre 50°C et 160°C jusqu'à obtenir une émulsion de liant bitume/polymère dans laquelle le polymère dudit liant est au moins partiellement réticulé en une structure tridimensionnelle.

Si besoin est, l'émulsion produite dans la zone de formation d'émulsion peut être amenée dans une zone de maturation, dont la température est maintenue entre 80°C et 160°C, et stockée dans ladite zone pendant une durée suffisante allant de 15 minutes à 4 heures pour que la réticulation du polymère du liant en une structure tridimensionnelle continue soit complète.

Le bitume, qui constitue la partie majoritaire de la composante bitume/polymère, est choisi parmi les divers bitumes ayant une pénétration, déterminée suivant la norme NF T 66004, comprise entre 10 et 500 et de préférence entre 20 et 400. De tels bitumes peuvent être, en particulier, des bitumes de distillation directe ou de distillation sous pression réduite, ou encore des bitumes soufflés ou semi-soufflés, lesdits bitumes ayant une pénétration comprise dans les intervalles précités.

Le polymère élastomérique vulcanisable au soufre présent dans la composante bitume/polymère peut être tel que polyisoprène, polynorbornène, polybutadiène, caoutchouc butyle, terpolymère éthylène/propylène/diène (EPDM). Avantageusement ledit polymère élastomérique est choisi parmi les copolymères statistiques ou séquencés de styrène et d'un diène conjugué car ces copolymères se dissolvent très facilement dans les bitumes et confèrent à ces derniers d'excellentes propriétés mécaniques et dynamiques et notamment de très bonnes propriétés de viscoélasticité. En particulier le copolymère de styrène et d'un diène conjugué est choisi parmi les copolymères séquencés de styrène et de butadiène, de styrène et d'isoprène, de styrène et de chloro-prène, de styrène et de butadiène carboxylé et de styrène et d'isoprène carboxylé. Le copolymère de styrène et de diène conjugué, et en particulier chacun des copolymères précités, a avantageusement une teneur pondérale en styrène allant de 5% à 50%. La masse moléculaire viscosimétrique moyenne du copolymère de styrène et de diène conjugué, et notamment celle des copolymères mentionnés ci-dessus peut être comprise, par exemple, entre 10 000 et 600 000 et se situe de préférence entre 30 000 et 400 000.

De préférence, le copolymère de styrène et de diène conjugué est choisi parmi les copolymères di- ou triséquencés de styrène et de butadiène, de styrène et d'isoprène, de styrène et de butadiène carboxylé ou encore de styrène et d'isoprène carboxylé, qui ont des teneurs en styrène et des masses moléculaires situées dans les intervalles définis précédemment.

La composante bitume/polymère peut encore renfermer 1 à 40% et plus particulièrement 2 à 20%, en poids du bitume, d'un agent fluxant, qui peut consister, notamment, en une huile hydrocarbonée présentant un intervalle de distillation à pression atmosphérique, déterminé selon la norme ASTM D 86-67, compris entre 100°C et 450°C et situé plus spécialement entre 150°C et 380°C. Une telle huile hydrocarbonée peut être, par exemple, une coupe pétrolière de caractère aromatique, une coupe pétrolière de caractère naphténo-aromatique, une coupe pétrolière de caractère naphténo-paraffinique, une coupe pétrolière de caractère paraffinique, une huile de houille ou encore une huile d'origine végétale.

La composante bitume/polymère ayant la viscosité requise peut être obtenue par simple mélange de la quantité appropriée de polymère élastomérique, comprise dans l'intervalle défini précédemment, avec le bitume choisi, quant à lui, pour avoir une viscosité compatible avec la viscosité de la composante bitume/polymère à produire. Ledit mélange est réalisé par mise en contact du polymère avec le bitume en opérant à une température appropriée entre 100°C et 230°C pour que le bitume soit à l'état fondu et sous agitation pendant une durée suffisante, généralement de l'ordre de quelques dizaines de minutes à quelques heures, pour obtenir un mélange homogène.

On peut encore produire la composante bitume/polymère en mélangeant tout d'abord le polymère élastomérique avec le bitume comme indiqué ci-dessus, puis en incorporant audit mélange un système de vulcanisation donneur de soufre en quantité propre à fournir une quantité de soufre élémentaire ou radicalaire représentant 0,5% à 10% et plus particulièrement 1% à 8% du poids du polymère utilisé pour produire la composante bitume/polymère et en maintenant le tout sous agitation à une température comprise entre 100°C et 230°C, par exemple correspondant à la température de mise en contact du polymère avec le bitume, pendant une durée suffisante pour former une composante bitume/polymère ayant la viscosité désirée et pour laquelle le polymère élastomérique est fixé au bitume.

Lorsque l'on utilise une composante bitume/polymère renfermant un agent de fluxage, ce dernier peut être ajouté au milieu que l'on constitue comme indiqué plus haut à partir du bitume, du polymère élastomérique et éventuellement du système de vulcanisation, à un moment quelconque de la constitution dudit milieu, la quantité d'agent de fluxage étant choisie pour être compatible avec l'usage final désiré sur le chantier. Dans une telle forme de réalisation de la composante bitume/polymère utilisant un agent fluxant et un système de vulcanisation donneur de soufre, le polymère élastomérique et le système de vulcanisation sont incorporés au bitume sous la forme d'une solution mère de ces produits dans l'agent fluxant et en particulier dans l'huile hydrocarbonée définie précédemment comme susceptible de constituer l'agent fluxant. La solution mère peut être préparée par mise en contact des ingrédients la composant, à savoir agent fluxant, polymère élastomérique et système de vulcanisation, à des températures comprises entre 10°C et 140°C et de préférence entre 10°C et 100°C pendant un temps suffisant, par exemple 30 minutes à 120 minutes, pour obtenir une dissolution complète du polymère élastomérique et du système de vulcanisation dans l'agent fluxant. Les concentrations respectives du polymère élastomérique et du système de vulcanisation dans la solution mère peuvent varier assez largement en fonction notamment de la nature de l'agent fluxant utilisé pour dissoudre le polymère et le système de vulcanisation. Ainsi la quantité de polymère peut représenter avantageusement 5% à 30% du poids de l'agent fluxant, tandis que la quantité de système de vulcanisation est propre à fournir une quantité de soufre représentant 0,5 à 10% et de préférence 1 à 8% du poids du polymère présent dans la solution mère.

Pour préparer la composante bitume/polymère en utilisant la solution mère, on mélange la solution mère du polymère et du système de vulcanisation dans l'agent fluxant avec le bitume, en opérant à une température comprise entre 100°C et 230°C et sous agitation, ceci étant réalisé par exemple en ajoutant la solution mère au bitume maintenu sous agitation à la température choisie entre 100°C et 230°C, puis on maintient le mélange résultant sous agitation à une température comprise entre 100°C et 230°C, par exemple à la température utilisée pour effectuer le mélange du bitume et de la solution mère, pendant une durée suffisante pour obtenir un produit fluide d'aspect continu et de viscosité compatible avec l'usage final sur le chantier et dans lequel, par le biais du système de vulcanisation, un pontage des chaînes du polymère entre elles et/ou avec le bitume est réalisé.

La quantité de solution mère mélangée au bitume est choisie pour fournir les quantités désirées, par rapport au bitume, de polymère et de système de vulcanisation, lesdites quantités étant dans les fourchettes définies précédemment.

La composante bitume/polymère peut encore renfermer des additifs divers et notamment des composés azotés du type des amines ou amides à titre de promoteurs d'adhésion du liant bitume/polymère final aux surfaces minérales, lesdits composés azotés étant de préférence greffés sur la composante bitume/polymère et en particulier sur les chaînes polymériques de ladite composante.

Le système de réticulation donneur de soufre utilisé dans la mise en oeuvre du procédé selon l'invention, de même que le système de vulcanisation donneur de soufre employé éventuellement dans la préparation de la composante bitume/polymère peuvent consister en un produit choisi parmi le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre. En particulier, le système de réticulation ou de vulcanisation donneur de soufre est choisi parmi les produits M, qui renferment, en poids, de 0% à 100% d'une composante A consistant en un ou plusieurs accélérateurs de vulcanisation donneurs de soufre et de 100% à 0% d'une composante B consistant en un ou plusieurs agents de vulcanisation choisis parmi le soufre élémentaire et les polysulfures d'hydrocarbyle, et les poduits N, qui renferment une composante C consistant en un ou plusieurs accélérateurs de vulcanisation non donneurs de soufre et un produit M dans un rapport pondéral de la composante C au produit M allant de 0,01 à 1 et de préférence de 0,05 à 0,5.

Le soufre élémentaire susceptible d'être utilisé pour constituer, en partie ou en totalité, le système de réticulation ou de vulcanisation donneur de soufre est avantageusement du soufre en fleur et de préférence du soufre cristallisé sous la forme orthorhombique et connu sous le nom de soufre alpha.

Les polysulfures d'hydrocarbyle susceptibles d'être utilisés pour former au moins une partie du système de réticulation ou de vulcanisation donneur de soufre répondent à la formule générale 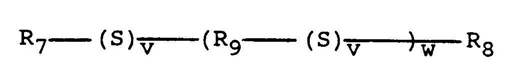
dans laquelle R₇ et R₈ désignent chacun un radical hydrocarboné monovalent, saturé ou insaturé, en C₁ à C₂₀ ou sont reliés entre eux pour constituer un radical hydrocarboné divalent en C₂ à C₂₀, saturé ou insaturé, formant un cycle avec les autres groupements d'atomes associés dans la formule, R₉ est un radical hydrocarboné divalent, saturé ou insaturé, en C₁ à C₂₀, les 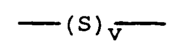
représentent des groupements divalents formés chacun de v atomes de soufre, les v pouvant être différents de l'un desdits groupements à l'autre et désignant des nombres entiers allant de 1 à 6 avec au moins l'un des v égal ou supérieur à 2, et w représente un nombre entier prenant les valeurs de zéro à 10.

Dans la formule précitée, les radicaux hydrocarbonés monovalents R₇ et R₈ en C₁ à C₂₀ ainsi que le radical hydrocarboné divalent R₉ en C₁ à C₂₀ sont choisis notamment parmi les radicaux aliphatiques, alicycliques ou aromatiques. Lorsque les radicaux R₇ et R₈ sont reliés entre eux pour constituer un radical hydrocarboné divalent en C₁ à C₂₀ formant un cycle avec les autres groupements d'atomes associés dans la formule, ledit radical divalent est similaire au radical R₉ et peut être également du type aliphatique, alicyclique, ou aromatique. En particulier les radicaux R₇ et R₈ sont identiques et choisis parmi les radicaux alcoyles en C₁ à C₂₀, par exemple éthyle, propyle, hexyle, octyle, nonyle, décyle, dodécyle linéaire, tertiododécyle, hexadécyle, octadécyle et les radicaux cycloalcoyles et aryles en C₆ à C₂₀, notamment benzyle, phényle, tolyle, cyclohexyle, tandis que le radical R₉ ou le radical divalent formé par la réunion de R₇ et R₈ sont choisis parmi les radicaux alcoylènes en C₁ à C₂₀ ou les radicaux cycloalcoylènes ou arylènes, notammment phénylène, tolylène, cyclohexylène, en C₆ à C₂₀.

Des polysulfures utilisables suivant l'invention sont en particulier ceux définis par la formule R₇―(S)ᵤ―R₈ dans laquelle R₇ et R₈ désignent chacun un radical hydrocarboné monovalent, saturé ou insaturé, en C₁ à C₂₀ ou sont reliés entre eux pour former un radical divalent R₉ en C₁ à C₂₀, R₇, R₈ et R₉ ayant les significations précédentes, 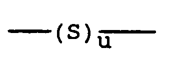
représente un groupement divalent formé par un enchaînement de u atomes de soufre, u étant un nombre entier allant de 2 à 6.

Des polysulfures préférés répondent à la formule générale R₁₀―(S)ₜ―R₁₀ dans laquelle R₁₀ désigne un radical alcoyle en C₆ à C₁₆, et ―(S)ₜ― représente un groupement divalent formé par un enchaînement de t atomes de soufre, t étant un nombre entier allant de 2 à 5. Des exemples de tels polysulfures sont notamment disulfure de dihexyle, disulfure de dioctyle, disulfure de didodécyle, disulfure de ditertiododécyle, disulfure de dihexadécyle, trisulfure de dihexyle, trisulfure de dioctyle, trisulfure de dinonyle, trisulfure de ditertiododécyle, trisulfure de dihexadécyle, tétrasulfure de dihexyle, tétrasulfure de dioctyle, tétrasulfure de dinonyle, tétrasulfure de ditertiododécyle, tétrasulfure de dihexadécyle, pentasulfure de dihexyle, pentasulfure de dioctyle, pentasulfure de dinonyle, pentasulfure de ditertiododécyle, pentasulfure de dihexadécyle.

D'autres polysulfures, qui peuvent être utilisés suivant l'invention, sont par exemple tels que trisulfure de diphényle, trisulfure de dibenzyle, tétrasulfure de diphényle, tétrasulfure d'orthotolyle, tétrasulfure de dibenzyle, pentasulfure de dibenzyle, pentasulfure de diallyle, tétraméthyltétrathiane.

Les accélérateurs de vulcanisation donneurs de soufre peuvent être choisis, en particulier, parmi les polysulfures de thiurame de formule générale 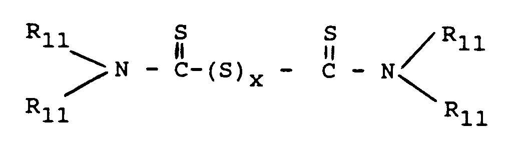
dans laquelle les R₁₁, identiques ou différents, représentent chacun un radical hydrocarboné en C₁ à C₁₂ et de préférence en C₁ à C₈, notamment un radical alcoyle, cycloalcoyle ou aryle, ou bien deux radicaux R₁₁ fixés à un même atome d'azote sont reliés entre eux pour former un radical divalent hydrocarboné en C₂ à C₈ et x est un nombre allant de 2 à 8. Comme exemples de tels accélérateurs de vulcanisation on peut citer notamment les composés disulfure de dipentaméthylène thiurame, tétrasulfure de dipentaméthylène thiurame, hexasulfure de dipentaméthylène thiurame, disulfure de tétrabutylthiurame, disulfure de tétraéthylthiurame et disulfure de tétraméthylthiurame.

Comme autres exemples d'accélérateurs de vulcanisation donneurs de soufre ont peut encore citer les disulfures d'alcoylphénols et les disulfures tels que disulfure de morpholine et N,N'-disulfure de caprolactame.

Les accélérateurs de vulcanisation non donneurs de soufre peuvent être des composés soufrés choisis notamment parmi le mercaptobenzothiazole et ses dérivés, les dithiocarbamates de formule générale (I) 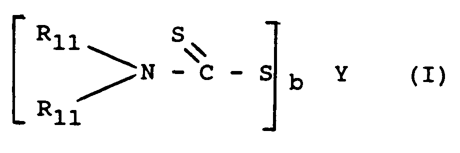
dans laquelle les R₁₁, identiques ou différents, ont la signification donnée plus haut, Y représente un métal et b désigne la valence de Y, et les monosulfures de thiurame de formule générale(II) 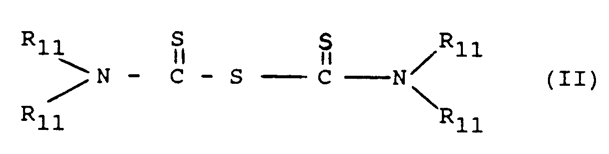
dans laquelle les R₁₁, identiques ou différents, ont la signification donnée plus haut.

Des exemples d'accélérateurs de vulcanisation du type des mercaptobenzothiazoles peuvent être tels que mercaptobenzothiazole, benzothiazole thiolate de zinc, benzothiazole thiolate de sodium, disulfure de benzothiazyle, benzothiazole thiolate de cuivre, N,N'-diéthylthiocarbamyle sulfure de benzothiazyle et les benzothiazolesulfénamides telles que 2-benzothiazolediéthylsulfénamide, 2-benzothiazolepentaméthylènesulfénamide, 2-benzothiazolecyclohexylsulfénamide, N-oxydiéthylène 2-benzothiazolesulfénamide, N-oxydiéthylène 2-benzothiazolethiosulfénamide, 2-benzothiazoledicyclohexyl-sulfénamide, 2-benzothiazolediisopropylsulfénamide, 2-benzothiazoletertiobutylsulfénamide, N-oxydiéthylènethiocarbamyl N′-oxydiethylènesulfénamide.

Parmi les accélérateurs de vulcanisation du type des dithiocarbamates de formule générale (I), on peut citer en particulier les composés diméthyldithiocarbamate de bismuth, diamyldithiocarbamate de cadmium, diéthyldithiocarbamate de cadmium, diméthyldithiocarbamate de cuivre, dibutyldithiocarmate de zinc, diamyldithiocarbamate de plomb, diméthyldithiocarbamate de plomb, pentaméthylènedithiocarbamate de plomb, diméthyldithiocarbamate de sélénium, diéthyldithiocarbamate de tellure, diamyldithiocarbamate de zinc, dibenzyldithiocarbamate de zinc, diéthyldithiocarbamate de zinc, diméthyldithiocarbamate de zinc et pentaméthylènedithiocarbamate de zinc.

A titre d'exemples de monosulfures de thiurame répondant à la formule (II), on peut citer les composés tels que monosulfure de dipentaméthylènethiurame, monosulfure de tétrabutylthiurame, monosulfure de tétraéthylthiurame et monosulfure de tétraméthylthiurame.

D'autres accélérateurs de vulcanisation non donneurs de soufre, qui n'appartiennent pas aux familles définies plus haut, peuvent être également utilisés. De tels accélérateurs de vulcanisation peuvent être tels que diphényl-1,3 guanidine, diorthololylguanidine et oxyde de zinc, ce dernier composé pouvant être employé éventuellement en présence d'acides gras du type acide stéarique, acide éthylcaproique, acide laurique.

Avantageusement les accélérateurs de vulcanisation donneurs de soufre utilisables selon l'invention sont tels que disulfure de tétramétylthiurame, disulfure de tétraéthylthiurame et tétrasulfure de dipentamétylènethiurame et les accélérateurs de vulcanisation non donneurs de soufre sont tels que 2-mercaptobenzothiazole, disulfure de dibenzothiazyle, benzothiazolethiolate de zinc, 2-benzothiazolecyclohexylsulfénamide, N-oxydiéthylène 2-benzothiazolesulfénamide, 2-benzothiazolediisopropylsulfénamide, 2-benzothiazoledicyclohexylsulfénamide, diméthyldithiocarbamate de zinc, diéthyldithiocarbamate de zinc, dibutyldithiocarbamate de zinc, monosulfure de tétraméthylthiurame, diorthotolylguanidine, disulfure de morpholine et oxyde de zinc.

De par leur composition, comme indiqué plus haut, le système de réticulation, de même que le système de vulcanisation peuvent être du type monocomposante ou du type multicomposante, le système du type multicomposante pouvant être formé préalablement à son utilisation ou encore produit in situ dans le milieu dans lequel il doit être présent. Le système de réticulation ou de vulcanisation du type multicomposante préformé ou du type monocomposante ou les composantes du système du type multicomposante formé in situ peuvent être employés tels quels, par exemple à l'état fondu, ou bien en mélange, par exemple en solution ou en suspension, avec un diluant, qui peut être notamment un composé hydrocarboné et en particulier une huile hydrocarbonée du type de celle définie précédemment comme susceptible de constituer l'agent fluxant ou encore un bitume, ledit diluant représentant avantageusement 5 à 45% du poids dudit mélange.

La phase aqueuse, qui est utilisée dans la mise en oeuvre du procédé selon l'invention, est constituée d'eau renfermant un système émulsifiant en quantité efficace, c'est-à-dire en quantité propre à permettre la dispersion des globules de la composante bitume/polymère dans ladite phase aqueuse et à empêcher la réagglomération desdits globules dispersés. La quantité de système émulsifiant est généralement choisie pour représenter 0,005% à 3% et de préférence de 0,01% à 2% du poids total de l'émulsion.

Le système émulsifiant présent dans la phase aqueuse de l'émulsion peut être de nature cationique, anionique, non ionique ou même amphotère. Un système émulsifiant de nature cationique, qui donne naissance à une émulsion cationique, comporte un ou plusieurs agents émulsifiants cationiques que l'on peut choisir avantageusement parmi les agents émulsifiants cationiques azotés tels que monoamines grasses, polyamines, amidoamines, amidopolyamines, sels ou oxydes desdites amines et amidoamines, produits de réaction des composés précités avec l'oxyde d'éthylène et/ou l'oxyde de propylène, imidazolines et sels d'ammonium quaternaires. En particulier le système émulsifiant de nature cationique peut être formé par l'association d'un ou plusieurs agents émulsifiants cationiques A choisis parmi les agents émulsifiants azotés cationiques du types des monoamines, des diamines, des amidoamines, des oxydes de telles amines ou amidoamines, des produits de réaction de tels composés avec l'oxyde d'éthylène et/ou l'oxyde de propylène et des sels d'ammonium quaternaires, avec un ou plusieurs agents émulsifiants B choisis parmi les agents émulsifiants azotés cationiques possédant dans leur molécule au moins trois groupements fonctionnels choisis parmi les groupements amines et amides de telle sorte que l'un au moins desdits groupements fonctionnels soit un groupement amine, le rapport de la quantité pondérale du ou des composés A à la quantité pondérale totale des composés A et B allant en particulier de 5% à 95%. Un système émulsifiant de nature anionique, qui donne naissance à une émulsion anionique, comporte un ou plusieurs agents émulsifiants anioniques que l'on peut choisir notamment parmi les sels de métal alcalin ou d'ammonium d'acides gras, les polyalcoxycarboxylates de métal alcalin, les N-acylsarcosinates de métal alcalin, les hydrocarbylsulfonates de métal alcalin et notamment les alcoylsulfonates de sodium, les arylsulfonates de sodium et les alcoylarylsulfonates de sodium, les alcoylarènesulfonates de sodium, les lignosulfonates de sodium, les dialcoylsulfosuccinates de sodium et les alcoylsulfates de sodium. On peut également utiliser un système émulsifiant de nature non ionique formé d'un ou plusieurs agents émulsifiants non ioniques que l'on peut notamment choisir parmi les alcools gras éthoxylés, les acides gras éthoxylés, les esters de sorbitan, les esters de sorbitan éthoxylés, les alcoylphénols éthoxylés, les amides gras éthoxylés et les esters d'acides gras de la glycérine. On peut encore utiliser un système émulsifiant de nature amphotère formé d'un ou plusieurs agents émulsifiants amphotères que l'on peut choisir, par exemple, parmi les bétaines et les dérivés imidazolinium amphotères. Il est également possible d'utiliser un système émulsifiant consistant en un mélange d'agents émulsifiants de natures différentes, par exemple un mélange d'un ou plusieurs agents émulsifiants anioniques ou cationiques avec un ou plusieurs agents émulsifiants non ioniques ou/et amphotères. Pour plus de détails sur les agents émulsifiants susceptibles de constituer des systèmes émulsifiants utilisables selon l'invention, on peut se référer au manuel de KIRK-OTHMER intitulé ENCYCLOPEDIA OF CHEMICAL TECHNOLOGY, Third Edition, Volume 22, pages 347 à 360 (émulsifiants anioniques), pages 360 à 377 (émulsifiants non ioniques), pages 377 à 384 (émulsifiants cationiques) et pages 384 à 387 (émulsifiants amphotères).

Avantageusement, le système émulsifiant est choisi parmi les systèmes émulsifiants de nature anionique, l'émulsion obtenue étant une émulsion anionique, ou parmi les systèmes émulsifiants de nature cationique, l'émulsion obtenue étant une émulsion cationique.

Si besoin est, on peut encore incorporer à la phase aqueuse un agent destiné à ajuster le pH de l'émulsion à la valeur désirée. Ledit agent peut être un acide, par exemple un acide minéral tel que HCl, HNO₃, H₃PO₄ ou un acide mono-ou polycarboxylique saturé ou insaturé tel que l'acide acétique, l'acide formique, l'acide oxalique ou l'acide citrique, lorsque la valeur du pH de l'émulsion doit être abaissée, ou bien une base ou un sel basique, notamment une base minérale consistant en un hydroxyde de métal alcalin comme la soude ou en un oxyde ou hydroxyde alcalinoterreux, lorsque la valeur du pH de l'émulsion doit être augmentée.

Outre le système émulsifiant et l'éventuel agent d'ajustement du pH, la phase aqueuse peut encore renfermer des additifs divers tels que des sels, notamment chlorure de sodium ou chlorure de calcium, permettant, dans certains cas, d'augmenter la viscosité obtenue, des agents d'adhésivité, ou même des agents épaississants qui peuvent être tels que scléroglucane, scléroglucane modifié au glyoxal ou par un autre réactif, gomme guar, gomme arabique, gomme ghatti, gomme karaya, gomme tragacanth, gomme locustbean, gomme xanthane, polyuréthanne hydrosoluble de masse moléculaire viscosimétrique inférieure à 20 000 résultant en particulier de la réaction d'un ou plusieurs polyisocyanates avec un ou plusieurs polyols choisis parmi les polyesterpolyols et les polyétherpolyols. La quantité d'agent épaississant présent dans la phase aqueuse est choisie pour être comprise, par exemple, entre 100 et 5000 ppm en poids de ladite phase.

Pour préparer la phase aqueuse, que l'on met en contact dans la zone de formation de l'émulsion avec la composante bitume/polymère et le système de réticulation, on incorpore le système émulsifiant et les autres ingrédients éventuels, notamment agent d'ajustement du pH et agent épaississant, à la quantité d'eau nécessaire à la fabrication du liant bitume/polymère en émulsion et portée préalablement à une température comprise entre 10°C et 90°C et de préférence entre 20°C et 80°C. La quantité de système émulsifiant ajoutée à l'eau est choisie pour que la concentration dudit système émulsifiant dans l'émulsion finale soit située dans l'intervalle défini précédemment. Lorsque d'autres ingrédients, notamment agent d'ajustement du pH, agent épaississant, sels, doivent être incorporés à la phase aqueuse, les quantités respectives desdits ingrédients sont celles utilisées couramment à cet effet.

Par exemple, la phase aqueuse pour réaliser une émulsion anionique peut être préparée comme suit. Dans de l'eau, maintenue à une température comprise entre 10°C et 90°C et plus particulièrement entre 20°C et 80°C, on dissout ou disperse, en opérant sous agitation, la quantité appropriée d'un précurseur d'agent émulsifiant du type anionique consistant en un acide ou polyacide à chaine aliphatique saturée ou partiellement insaturée ou également partiellement cyclique. Une solution concentrée de NaOH ou KOH est ensuite ajoutée à la solution ou suspension obtenue jusqu'à neutralisation de l'acide et formation du sel correspondant qui constitue l'agent émulsifiant anionique. Le pH de l'émulsion peut s'échelonner entre 7 et 13 et plus spécialement entre 9 et 11. La concentration en précurseur acide de la phase aqueuse est choisie pour représenter entre 0,02% et 2% du poids de l'émulsion finale selon l'utilisation de l'émulsion sur la chaussée.

Lorsque l'on désire former une émulsion cationique, la phase aqueuse peut, par exemple, être préparée comme suit. Dans de l'eau, maintenue à une température comprise entre 10°C et 90°C et plus particulièrement ente 20°C et 80°C, on disperse une quantité appropriée d'un ou plusieurs agents émulsifiants cationiques, par exemple du type des amines grasses ou des polyéthylènepolyamines à chaîne grasse, puis on ajoute à la dispersion ainsi obtenue une quantité suffisante d'un acide minéral ou d'un acide organique monocarboxylique ou polycarboxylique pour obtenir un pH final compris entre 1 et 7 et de préférence entre 2 et 5. La concentration en agent(s) émulsifiant(s) cationiques(s) de la phase aqueuse est choisie pour représenter 0,2 à 2% du poids de l'émulsion cationique finale.

Lorsque, dans l'un ou l'autre des exemples de préparation de la phase aqueuse donnés ci-dessus, on utilise des additifs tels que sel, agent d'adhésivité ou encore agent épaississant, ces additifs sont ajoutés à la phase aqueuse à un moment quelconque de la préparation de cette dernière et dans un ordre quelconque.

Pour préparer l'émulsion aqueuse de liant bitume/polymère à structure polymérique tridimensionnelle continue, à partir de la composante bitume/polymère, de la phase aqueuse et du système de réticulation donneur de soufre, on opère avantageusement comme suit.

A la composante bitume/polymère, on mélange tout d'abord le système de réticulation donneur de soufre, ou chacune des composantes destinées à former ledit système in situ, en concentration propre à fournir une quantité de soufre représentant 0,5 à 20% et de préférence 1 à 15 % du poids du polymère élastomérique présent dans la composante bitume/polymère. Ce mélange peut être réalisé par charges séparées, en ajoutant le système de réticulation donneur de soufre ou ses composantes à une charge de la composante bitume/polymère maintenue à une température comprise entre 100°C et 230°C et de préférence entre 120°C et 180°C dans une cuve agitée mécaniquement et permettant une homogénéisation rapide. Ledit mélange peut être également effectué en continu par injection en ligne du système de réticulation donneur de soufre ou de ses composantes dans un courant de la composante bitume/polymère maintenu à une température comprise entre 100°C et 230°C et de préférence entre 120°C et 180°C, puis homogénéisation de l'ensemble dans un mélangeur statique ou encore dans un mélangeur mécanique en ligne.

Dès que la composante bitume/polymère et le système de réticulation donneur de soufre ont été mélangés, s'amorce une réaction de réticulation du polymère élastomérique par le soufre fourni par le système de réticulation conduisant à la formation d'un produit à structure polymérique tridimensionnelle continue et il est important que le mélange de la composante bitume/polymère et du système de réticulation soit mis en émulsion immédiatement ou le plus rapidement possible après sa formation avant que la viscosité dudit mélange n'atteigne une valeur empêchant le transport de ce mélange jusqu'à la zone de formation de l'émulsion ou tout simplement le pompage dudit mélange.

Le mélange intime de la composante bitume/polymère et du système de réticulation donneur de soufre, qui se trouve à une température comprise entre 100°C et 230°C et de préférence entre 120°C et 180°C et suffisante pour que ledit mélange soit sous la forme d'une masse fondue, est donc amené, substantiellement immédiatement après sa formation, au contact de la phase aqueuse ayant une température appropriée comprise entre 10°C et 90°C et de préférence entre 20°C et 80°C et l'ensemble est introduit immédiatement dans la zone de formation de l'émulsion consistant en un moulin colloidal opérant à une température comprise entre 80°C et 160°C. Dans une variante, le mélange intime de la composante bitume/polymère et du système de réticulation donneur de soufre et la phase aqueuse ayant respectivement des températures telles que précitées sont tout d'abord mis en contact dans un prémélangeur pour réaliser une prédispersion des deux phases et la prédispersion résultante est amenée ensuite à la zone de formation de l'émulsion du type moulin colloidal opérant à la température précitée. Le moulin colloidal consiste en un ou plusieurs rotors de type conique, cylindrique ou en forme de disque tournant face à un stator respectivement conique, cylindrique ou en forme de disque et maintenu à une distance du rotor comprise entre 0,01mm et 3mm, cette distance définissant l'entrefer du moulin colloidal. L'architecture interne de ces moulins colloidaux peut aller de surfaces parfaitement lisses jusqu'à des ouvertures pratiquées dans le stator et le rotor en passant par des rainures pratiquées sur le rotor ou/et sur le stator.

Lorsque le mélange de la composante bitume/polymère et du système de réticulation donneur de soufre est à une température, qui conduit, après contact avec la phase aqueuse, à une température supérieure à la température d'ébullition de l'eau, le circuit doit être maintenu sous une pression suffisante pour empêcher l'ébullition de l'eau. Dans ce cas, l'émulsion évacuée de la zone de formation de l'émulsion doit être refroidie, par exemple dans un échangeur thermique à air ou à eau, à une température inférieure à 100°C avant d'être ramenée à la pression atmosphérique pour être dirigée vers le stockage final ou encore pour être chargée directement dans un camion de répandage.

Comme indiqué précédemment l'émulsion issue de la zone de formation de l'émulsion peut être avantageusement maintenue dans une zone de maturation à une température comprise entre 80°C et 160°C et pendant une durée suffisante allant de 15 minutes à 4 heures pour que la réaction de réticulation par le soufre, qui a lieu au sein des globules de la composante bitume/polymère en dispersion dans la phase aqueuse, soit complète. Lorsque le système de réticulation donneur de soufre ne renferme pas d'accélérateur de réticulation, l'émulsion issue de la zone de formation de l'émulsion est maintenue dans la zone de maturation à une température comprise de préférence entre 100°C et 160°C et plus particulièrement entre 100°C et 120°C pendant une durée allant de 15 minutes à 2 heures. Lorsque le système de réticulation renferme un accélérateur de réticulation, l'émulsion issue de la zone de formation de l'émulsion est maintenue dans la zone de maturation à une température comprise de préférence entre 80°C et 100°C et plus spécialement entre 85°C et 95°C pendant une durée allant de 15 minutes à 4 heures.

Par rupture de l'émulsion obtenue par le procédé selon l'invention, c'est-à-dire par coalescence des globules de liant bitume/polymère à structure polymérique tridimensionnelle continue en suspension dans la phase aqueuse, on obtient une phase continue présentant les propriétés d'élasticité, de cohésion et d'adhésivité du liant bitume/polymère en suspension dans la phase aqueuse. La phase aqueuse, quant à elle, est éliminée soit mécaniquement, soit par évaporation.

L'émulsion de liant bitume/polymère obtenue par le procédé selon l'invention est utilisable pour la réalisation de revêtements et notamment de revêtement routiers du type enduit superficiel, pour la production d'enrobés mis en place à chaud ou à froid, ou encore pour la réalisation de revêtements d'étanchéité.

En vue d'un emploi en enduit superficiel, on choisit comme émulsifiant de la phase aqueuse un émulsifiant permettant une rupture rapide de l'émulsion, ce qui entraîne la restitution d'un liant adhérant à la fois à la chaussée et aux granulats et dont les caractéristiques de point de ramollissement bille et anneau et d'adhésivité permettront de maintenir les granulats à la surface de la chaussée, particulièrement sous l'effet des contraintes tangentielles résultant du passage de pneumatiques à la surface de l'enduit, le point de ramollissement bille et anneau élevé du liant bitume/polymère permettant de prévenir de façon efficace les phénomènes de ressuage qui peuvent apparaître sous fort trafic sur des supports mous avec les liants bitumineux conventionnels modifiés ou non par des polymères.

Si le but final de l'utilisation de l'émulsion est la mise en place d'un enrobé, on peut opérer soit à froid par répandage à l'aide d'un finisseur du mélange granulat/émulsion préparé en centrale d'enrobage, suivi d'un compactage dudit mélange par des rouleaux lisses ou/et par des compacteurs à pneumatiques, soit à chaud par malaxage de l'émulsion avec les granulats chauds jusqu'à évaporation complète de l'eau, suivi du répandage à l'aide d'un finisseur de l'enrobé préparé en centrale d'enrobage, puis du compactage dudit enrobé par des rouleaux lisses ou/et des compacteurs pneumatiques. Sous l'effet du cisaillement dû au compactage et de l'évaporation de l'eau résultant de la mise sous film très mince de l'émulsion, ladite émulsion restituera un liant bitume/polymère ayant les propriétés décrites précédemment.

Dans les cas ci-dessus, le point de ramollissement bille et anneau élevé du liant selon l'invention conduira à une résistance accrue à l'orniérage et la cohésivité dudit liant se traduira par une bonne résistance de la structure à la fissuration de fatigue et de retrait thermique.

L'émulsion obtenue par le procédé selon l'invention peut également être introduite à chaud dans une centrale d'enrobage où les granulats préalablement chauffés et séchés sont malaxés avec ladite émulsion, ce qui entraîne l'évaporation de l'eau présente dans l'émulsion sous l'effet de la chaleur. Le liant restitué après rupture de l'émulsion et départ de l'eau présente les propriétés précédemment indiquées de cohésivité, d'élasticité et de point de ramollissement bille et anneau.

L'émulsion préparée par le procédé selon l'invention peut être encore utilisée dans la technique des enrobés coulés à froid. Dans ce cas la composition de la phase aqueuse est adaptée, comme il est connu dans l'art, pour permettre une rupture du coulis après son malaxage et son répandage sur la chaussée. De par la forte cohésivité du liant obtenu selon l'invention et son point de ramollissement bille et anneau élevé, une telle technique peut être utilisée avantageusement sur les chaussées à forte circulation comme cela peut être le cas pour les chaussées d'un environnement urbain.

L'invention est illustrée par les exemples suivants donnés à titre non limitatif.

Dans ces exemples, les quantités et pourcentages sont exprimés en poids sauf indication contraire.

### EXEMPLE 1 :

On préparait deux émulsions d'un liant bitume/polymère, l'une (essai 1A) en faisant appel au procédé selon l'invention et l'autre (essai 1B), constituant une émulsion témoin, en opérant de manière conventionnelle.

### Essai 1A (Préparation de l'émulsion selon l'invention) :

En opérant à 170°C et sous agitation, on mélangeait 1000 parties d'un bitume de distillation directe ayant une pénétration, exprimée en 1/10 de mm, égale à 80,3, un point de ramollissement bille et anneau de 40,6°C, un point de FRAASS égal à -17°C et une viscosité cinématique à 160°C égale à 1,5x10⁻⁴ m²/s, avec 31 parties d'un copolymère diséquencé de styrène et de butadiène présentant une masse moléculaire moyenne viscosimétrique égale à 90 000 environ et renfermant 23% de styrène. Après 2,5 heures de mélange, on ajoutait à la masse homogène ainsi obtenue un système de vulcanisation consistant en une partie de soufre cristallisé et maintenait le tout sous agitation à la température de 170°C pendant encore 90 minutes, pour obtenir une composante bitume/polymère possédant une viscosité à 160°C égale à 0,35 Pa.s.

A 1000 parties de la composante bitume/polymère produite comme indiqué ci-dessus, maintenue à 170°C, on incorporait 10 parties de soufre cristallisé à titre de système de réticulation donneur de soufre et agitait le tout à ladite température jusqu'à l'obtention d'un mélange homogène.

Parallèlement, dans 430 parties d'eau maintenue à 50°C on introduisait, sous agitation, 4 parties d'un système émulsifiant consistant en une polyamine grasse de type polypropylènediamine jusqu'à dispersion complète dudit émulsifiant. La suspension ainsi obtenue était neutralisée par 2,5 parties d'acide chlorhydrique concentré en maintenant le tout sous forte agitation à la température de 50°C. La préparation résultante constituait la phase aqueuse utilisée pour former l'émulsion.

Immédiatement après la formation du mélange homogène de la composante bitume/polymère et du système de réticulation consistant en soufre cristallisé, 1000 parties dudit mélange, à la température de 170°C, étaient amenées au contact de 430 parties de phase aqueuse à 50°C et le tout était introduit, immédiatement après ladite mise en contact, dans une zone de formation d'émulsion consistant en un moulin colloidal du type turbine colloidale conique possédant un entrefer entre rotor et stator ayant une épaisseur entre 0,4 et 0,6 mm.

L'émulsion produite dans la zone de formation d'émulsion sortait de ladite zone avec une température de 112°C et était ensuite maintenue à 105°C pendant une heure dans une zone de maturation dans laquelle régnait une pression de 1,4 bar. A la sortie de la zone de maturation l'émulsion était refroidie à 91°C, avant sa sortie à la pression atmosphérique, par passage dans un échangeur de chaleur refroidi à l'eau.

### Essai 1B (Préparation de l'émulsion témoin) :

On préparait une composante bitume/polymère et parallèlement une phase aqueuse en opérant comme décrit dans l'essai 1A. La composante bitume/polymère obtenue avait une viscosité à 160°C égale à 0,35 Pa.s.

1000 parties de la composante bitume/polymère, à la température de 170°C, étaient amenées au contact de 430 parties de phase aqueuse à 50°C et le tout était introduit, immédiatement après ladite mise en contact, dans une zone de formation d'émulsion identique à celle utilisée dans l'essai 1A.

L'émulsion produite dans la zone de formation d'émulsion sortait de ladite zone avec une température de 112°C et était ensuite refroidie à 91°C, avant sa mise a la pression atmosphérique, par passage dans un échangeur de chaleur refroidi à l'eau.

Pour chacune des émulsions des essais 1A et 1B, on évaluait les deux grandeurs suivantes :
. viscosité déterminée selon la norme NF T 66005 et exprimée en secondes,
. indice de rupture aux fines siliceuses déterminé selon la norme NF T 66017 et représentant la quantité minimale, exprimée en grammes, de sable siliceux de granulométrie 40 à 150µm entraînant la rupture de 100g d'émulsion avec formation d'un caillot sable/liant bitumineux.

En outre, pour chacun des liants obtenus après rupture des émulsions des essais 1A et 1B, on a déterminé le point de ramollissement bille et anneau et à partir d'essais de traction réalisés, selon la norme NF T 46002, sur des éprouvettes obtenues par découpage à l'emporte-pièce à partir d'une plaque du liant selon l'invention, la viscosité dudit liant entraînant l'impossibilité de le couler, ou par moulage dans un moule silicone à partir du liant témoin, on a évalué l'élongation maximale en traction et la contrainte à l'élongation maximale. Les résultats obtenus sont rassemblés dans le tableau I. L'examen des valeurs inscrites au tableau I fait ressortir que l'addition d'un système de réticulation à la composante bitume/polymère immédiatement avant la mise en émulsion de ladite composante entraîne d'une part le doublement de la valeur de la contrainte à 900% d'élongation du liant obtenu après évaporation de l'eau de l'émulsion et d'autre part le passage du point de ramollissement bille et anneau dudit liant de 51°C à 103°C.

**TABLEAU I**

| Nature de l'émulsion | 1 A | 1 B |
|---|---|---|
| Caractéristiques de l'émulsion: | | |
| . Viscosité (s) | 36 | 29 |
| . Indice de rupture (g) | 107 | 113 |

| Caractéristiques du liant : | | |
|---|---|---|
| . Point de ramollissement bille et anneau (°C) : | 103 | 51 |
| . Elongation maximale en traction (%) *⁾ : | >900 | >900 |
| . Contrainte à élongation maximale en traction (bar): | 1,4 | 0,7 |

| | | |
|---|---|---|
| *) Essai de traction réalisé à 20°C avec une vitesse de 500mm/minute. | | |

### EXEMPLE 2 :

On préparait deux émulsions d'un liant bitume/polymère, l'une (essai 2A) en faisant appel au procédé selon l'invention et l'autre (essai 2B), constituant une émulsion témoin, en opérant de manière conventionnelle.

### Essai 2A (Préparation de l'émulsion selon l'invention) :

On préparait une composante bitume/polymère en opérant comme décrit dans l'essai 1A de l'exemple 1 avec toutefois utilisation d'un système de vulcanisation consistant en 0,7 partie de soufre cristallisé et en 0,3 partie de disulfure de tétraméthylthiurame à titre d'accélérateur de vulcanisation.
La composante bitume/polymère obtenue avait une viscosité à 160°C égale à 0,35 Pa.s.

A 1000 parties de la composant bitume/polymère produite comme indiqué ci-dessus, maintenue à 170°C, on incorporait, à titre de système de réticulation, 4 parties de soufre cristallisé et une partie d'un accélérateur de réticulation consistant en trisulfure de tétraméthylthiurame et agitait le tout à ladite température jusqu'à l'obtention d'un mélange homogène.

Parallèlement, on préparait une phase aqueuse comme décrit dans l'essai 1A de l'exemple 1.

Immédiatement après la formation du mélange homogène de la composante bitume/polymère et du système de réticulation, 1000 parties dudit mélange, à la température de 170 °C, étaient amenées au contact de 430 parties de la phase aqueuse à 50°C et le tout était introduit, immédiatement après ladite mise en contact, dans une zone de formation d'émulsion identique à celle utilisée dans l'essai 1A de l'exemple 1.

L'émulsion produite dans la zone de formation d'émulsion sortait de ladite zone avec une température de 112°C et était alors refroidie à une température de 95°C, par passage dans un échangeur indirect de chaleur parcouru par de l'eau froide, puis l'émulsion ainsi refroidie était maintenue entre 90°C et 95°C pendant 90 à 120 minutes dans une zone de maturation à pression atmosphérique pour parfaire la réaction de réticulation par le soufre, qui a lieu à l'intérieur des globules de composante bitume/polymère et conduit à la formation du liant bitume/polymère à structure polymérique tridimensionnelle continue.

### Essai 2B (Préparation de l'émulsion témoin)

On opérait comme indiqué dans l'essai 1B de l'exemple 1 en utilisant toutefois pour produire la composante bitume/polymère un système de vulcanisation constitué de 0,7 partie de soufre cristallisé et de 0,3 partie de disulfure de tétraméthylthiurame, la composante bitume/polymère obtenue ayant une viscosité à 160°C égale à 0,35 Pa.s.

Pour les émulsions des essais 2A et 2B ainsi que pour les liants bitume/polymère dérivant desdites émulsions par évaporation de l'eau qu'elles renferment, on déterminait des grandeurs analogues à celles indiquées dans l'exemple 1.

Les résultats obtenus sont rassemblés dans le tableau II.

**TABLEAU II**

| Nature de l'émulsion | 2 A | 2 B |
|---|---|---|
| Caractéristiques de l'émulsion: | | |
| . Viscosité (s) | 33 | 31 |
| . Indice de rupture (g) | 105 | 111 |

| Caractéristiques du liant : | | |
|---|---|---|
| . Point de ramollissement | | |
| bille et anneau (°C) : | 97 | 50 |
| . Elongation maximale | | |
| en traction (%) *⁾ : | >900 | >900 |
| . Contrainte à élongation | | |
| maximale en traction (bar): | 1,12 | 0,6 |

| | | |
|---|---|---|
| *) Essai de traction réalisé à 20°C avec une vitesse de 500mm/minute. | | |

La comparaison des valeurs figurant au tableau II fait encore ressortir que le liant bitume/polymère obtenu selon l'invention (addition d'un système de réticulation donneur de soufre à la composante bitume/polymère immédiatement avant la mise en émulsion de ladite composante) possède des caractéristiques considérablement améliorées par rapport à celles du liant bitume/polymère témoin. De plus, il apparaît que l'emploi d'un accélérateur de réticulation donneur de soufre en mélange avec le soufre cristallisé pour constituer le système de réticulation, permet d'obtenir un liant bitume/polymère ayant des caractéristiques quasi-identiques à celles du liant bitume/polymère selon l'invention préparé dans l'exemple 1 sans avoir à maintenir l'émulsion à une température supérieure à 100°C dans une zone de maturation sous pression.

### EXEMPLES 3 A 5 :

On préparait une série d'émulsions de liant bitume/polymère selon l'invention en opérant comme indiqué dans l'essai 2A de l'exemple 2 avec toutefois certaines variations définies ci-après, les autres conditions opératoires étant celles dudit essai 2A.

Dans l'exemple 3, le système émulsifiant était formé de 2 parties de propylène diamine de suif neutralisées par une partie d'acide chlorhydrique concentré.

Dans l'exemple 4, le système de réticulation était formé d'une partie d'un mélange renfermant 30% de 2-benzothiazolecyclohexylsulfénamide et de 70% de soufre cristallisé, la température du mélange composante bitume/polymère et du système de réticulation était égale à 160°C et de plus le système émulsifiant était identique, en nature et quantité, à celui de l'exemple 3.

Dans l'exemple 5, le système de réticulation était formé d'un mélange de 4 parties d'un accélérateur de vulcanisation non donneur de soufre consistant en 2-benzothiazolecyclohexylsulfénamide et de 16 parties de soufre cristallisé dans 80 parties de bitume ayant une pénétration de 180/220, ledit système de vulcanisation étant incorporé à la composante bitume/polymère, dans un mélangeur statique en ligne, après quoi le mélange homogène issu dudit mélangeur était mis en contact avec la phase aqueuse immédiatement avant l'entrée dans la zone de formation de l'émulsion.

Pour les émulsions des exemples 3 à 5 ainsi que pour les liants bitume/polymère dérivant desdites émulsions par évaporation de l'eau gu'elles renferment, on déterminait des grandeurs analogues à celles indiquées dans l'exemple 2.

Les résultats obtenus sont rassemblés dans le tableau III.

Lesdits résultats font encore apparaître les propriétés améliorées des liants bitume/polymère obtenus par le procédé selon l'invention.

**TABLEAU III**

| EXEMPLE | 3 | 4 | 5 |
|---|---|---|---|
| Caractéristiques de l'émulsion: | | | |
| . Viscosité (s) | 27 | 23 | 25 |
| . Indice de rupture (g) | 90 | 85 | 95 |

| Caractéristiques du liant : | | | |
|---|---|---|---|
| . Point de ramollissement bille et anneau (°C) : | 100 | 95 | 107 |
| . Elongation maximale en traction (%) *⁾ : | >900 | >900 | >900 |
| . Contrainte à élongation maximale en traction (bar): | 1,07 | 0,97 | 1,58 |

| | | | |
|---|---|---|---|
| *) Essai de traction réalisé à 20°C avec une vitesse de 500mm/minute. | | | |

### EXEMPLE 6 :

En opérant à 160°C et sous agitation, on mélangeait 1000 parties d'un bitume ayant les caractéristiques du bitume utilisé dans l'exemple 1 avec 30 parties d'un copolymère diséquencé de styrène et de butadiène identique au copolymère utilisé dans l'exemple 1 jusqu'à obtenir une masse homogène, ce qui demandait 2,5 heures. On obtenait ainsi une composante bitume/polymère ayant une viscosité à 160°C égale à 0,17 Pa.s.

A 1000 parties de la composante bitume/polymère ainsi formée, maintenue à 160°C, on incorporait un système de réticulation consistant en 0,3 partie d'un accélérateur de réticulation consistant en disulfure de tétraméthylthiurame et en 0,7 partie de soufre cristallisé et agitait le tout jusqu'à l'obtention d'un mélange homogène.

Parallèlement, on préparait une phase aqueuse comme décrit dans l'essai 1A de l'exemple 1.

Immédiatement après la formation du mélange homogène de la composante bitume/polymère et du système de réticulation, 1000 parties dudit mélange, à la température de 160°C, étaient amenées au contact de 430 parties de la phase aqueuse à 50°C et le tout était introduit, immédiatement après ladite mise en contact, dans une zone de formation d'émulsion identique à celle utilisée dans l'essai 1A de l'exemple 1.

L'émulsion produite dans la zone de formation d'émulsion sortait de ladite zone à une température de 110°C et était alors refroidie puis maintenue dans une zone de maturation comme indiqué dans l'essai 2A de l'exemple 2.

Pour l'émulsion ainsi obtenue ainsi que pour le liant bitume/polymère dérivant de ladite émulsion, on déterminait des grandeurs similaires à celles indiquées dans l'exemple 1.

Les résultats obtenus sont consignés ci-après.

| Caractéristiques de l'émulsion | |
|---|---|
| . Viscosité (s) | 31 |
| . Indice de rupture (g) | 78 |

| Caractéristiques du liant | |
|---|---|
| . Point de ramollissement bille et anneau (°C) : | 111 |
| . Elongation maximale en traction (%) *⁾ : | >900 |
| . Contrainte à élongation maximale en traction (bar) : | 1,72 |

| | |
|---|---|
| *) Essai de traction réalisé à 20°C avec une vitesse de 500 mm/minute. | |

### EXEMPLE 7 :

A partir d'une composante bitume/polymère obtenue par une technique de solution mère, on préparait deux émulsions d'un liant bitume/polymère, l'une (essai 7A) en faisant appel au procédé selon l'invention et l'autre (essai 7B), constituant une émulsion témoin, en opérant de manière conventionnelle.

### Essai 7A (Préparation de l'émulsion selon l'invention) :

On préparait une solution mère de soufre cristallisé et d'un copolymère diséquencé de styrène et de butadiène renfermant 25% de styrène et possédant une masse moléculaire moyenne viscosimétrique d'environ 75000 dans un solvant du type huile hydrocarbonée consistant en une coupe pétrolière naphténoaromatique.

Ladite coupe pétrolière présentait un point initial et un point final de distillation ASTM, mesurés selon la norme ASTM D 86-67, égaux respectivement à 183°C et 348°C, un point éclair, mesuré selon la norme NF T 60103, égal à 81°C et une masse volumique, déterminée selon la norme ASTM D 1657-64, égal à 0,258.

Pour préparer la solution mère, on plaçait 200 parties de la coupe pétrolière dans un réacteur et la portait à 100°C sous agitation. On introduisait ensuite dans le réacteur 2 parties de soufre cristallisé et 76 parties du copolymère diséquencé et maintenait le tout sous agitation à 100°C pendant une heure.

On obtenait une solution homogène du soufre et du copolymère dans la coupe pétrolière présentant des valeurs de viscosité cinématique à 50°C et à 100°C égales respectivement à 12,7.10⁻⁴ m²/s et 2,89.10⁻⁴ m²/s.

En opérant à 170°C et sous agitation, on mélangeait 1700 parties d'un bitume identique à celui utilisé dans l'exemple 1 avec 300 parties de la solution mère décrite ci-dessus. Après 30 minutes d'agitation à 170°C, on obtenait une composante bitume/polymère possédant à 160°C une viscosité égale à 0,1 Pa.s.

A 1000 parties de la composante bitume/polymère produite comme indiqué ci-dessus, maintenue à 170°C, on ajoutait 9 parties de soufre cristallisé préalablement fondu à 125°C à titre de système de réticulation et agitait le tout pendant une minute.

Parallèlement, on préparait une phase aqueuse comme indiqué pour l'exemple 3 et on émulsionnait le mélange homogène de la composante bitume/polymère et de soufre cristallisé dans la phase aqueuse en opérant comme décrit pour ledit exemple 3.

### Essai 7B (Préparation de l'émulsion témoin) :

On préparait une composante bitume/polymère et parallèlement une phase aqueuse comme indiqué dans l'essai 7A, puis sans ajouter de système de réticulation à la composante bitume/polymère on émulsionnait ladite composante dans la phase aqueuse en opérant comme décrit dans ledit essai 7A.

Pour les émulsions des essais 7A et 7B ainsi que pour les liants bitume/polymère dérivant desdites émulsions par évaporation de l'eau qu'elles renferment, on déterminait des grandeurs analogues à celles indiquées dans l'exemple 1.

Les résultats obtenus sont rassemblés dans le tableau IV.

L'examen desdits résultats fait encore apparaître une nette amélioration des caractéristiques du liant bitume/polymère obtenu par le procédé selon l'invention par rapport aux caractéristiques du liant bitume/polymère témoin.

**TABLEAU IV**

| Nature de l'émulsion | 7 A | 7 B |
|---|---|---|
| Caractéristiques de l'émulsion: | | |
| . Viscosité (s) | 25 | 28 |
| . Indice de rupture (g) | 103 | 96 |

| Caractéristiques du liant : | | |
|---|---|---|
| . Point de ramollissement bille et anneau (°C) : | 51 | 27 |
| . Elongation maximale en traction (%) *⁾ : | >900 | >900 |
| . Contrainte à élongation maximale en traction (bar): | 3,2 | 1,7 |

| | | |
|---|---|---|
| *) Essai de traction réalisé à -10°C avec une vitesse de 500mm/minute | | |

## Revendications

1. Procédé pour préparer en émulsion aqueuse un liant bitume/polymère à structure polymérique tridimensionnelle continue, dans lequel on amène à une zone de formation d'émulsion (i) une composante bitume/polymère consistant en un bitume renfermant 0,5 % à 15 %, en poids du bitume, d'un polymère élastomérique réticulable au soufre, et (ii) une phase aqueuse renfermant une quantité efficace d'un système émulsifiant, le rapport pondéral de la composante bitume/polymère à la phase aqueuse allant de 30:70 à 85:15, et l'on maintient le milieu renfermant (i) et (ii) dans la zone de formation d'émulsion jusqu'à formation d'une émulsion, ledit procédé se caractérisant en ce que la composante bitume/polymère est amenée à la zone de formation d'émulsion sous la forme d'une masse fondue ayant une température entre 100°C et 230°C et possédant une viscosité d'au plus 2 Pa.s à ladite température, tandis que la phase aqueuse possède une température comprise entre 10°C et 90°C, en ce que l'on amène également à la zone de formation d'émulsion (iii) un système de réticulation donneur de soufre en quantité propre à fournir 0,5 à 20% en poids de soufre par rapport au poids de polymère élastomérique apporté par la composante bitume/polymère, et en ce que le milieu réactionnel formé des constituants (i), (ii) et (iii) est maintenu dans ladite zone à une température appropriée comprise entre 50°C et 160°C jusqu'à obtenir une émulsion de liant bitume/polymère dans laquelle le polymère dudit liant est au moins partiellement réticulé en une structure tridimensionnelle.

2. Procédé selon la revendication 1, caractérisé en ce que le système de réticulation donneur de soufre consiste en un produit choisi parmi le soufre élémentaire, les polysulfures d'hydrocarbyle, les accélérateurs de vulcanisation donneurs de soufre, les mélanges de tels produits entre eux ou/et avec des accélérateurs de vulcanisation non donneurs de soufre.

3. Procédé selon la revendication 2, caractérisé en ce que l'on forme tout d'abord un mélange intime de la composante bitume/polymère et du système de réticulation donneur de soufre à une température comprise entre 100°C et 230°C et suffisante pour que ledit mélange se présente sous la forme d'une masse fondue, puis l'on amène ce mélange, substantiellement immédiatement après sa formation, au contact de la phase aqueuse et l'ensemble est introduit, soit immédiatement ou après prédispersion dans une zone de prémélange, dans la zone de formation de l'émulsion.

4. Procédé selon la revendication 2 ou 3, caractérisé en ce que l'émulsion issue de la zone de formation d'émulsion est maintenue dans une zone de maturation à une température comprise entre 80°C et 160°C et pendant une durée allant de 15 minutes à 4 heures pour que la réaction de réticulation par le soufre, qui a lieu au sein des micelles de la composante bitume/polymère en émulsion dans la phase aqueuse, soit complète.

5. Procédé selon la revendication 4, caractérisé en ce que le système de réticulation donneur de soufre est exempt d'accélérateur de vulcanisation et en ce que l'émulsion est maintenue dans la zone de maturation à une température comprise entre 100°C et 160°C pendant une durée allant de 15 minutes à 2 heures.

6. Procédé selon la revendication 5, caractérisé en ce que l'émulsion est maintenue dans la zone de maturation à une température comprise entre 100°C et 120°C.

7. Procédé selon la revendication 4, caractérisé en ce que le système de réticulation donneur de soufre renferme un accélérateur de vulcanisation et en ce que l'émulsion est maintenue dans la zone de maturation à une température comprise entre 80°C et 100°C.

8. Procédé selon la revendication 7, caractérisé en ce que l'émulsion est maintenue dans la zone de maturation à une température comprise entre 85°C et 95°C.

9. Procédé selon l'une des revendications 1 à 8, caractérisé en ce que la température de la composante bitume/polymère sous la forme d'une masse fondue est comprise entre 120°C et 180°C.

10. Procédé selon l'une des revendications 1 à 9, caractérisé en ce que la composante bitume/polymère renferme une teneur en polymère élastomérique représentant 1 à 10% en poids du bitume.

11. Procédé selon l'une des revendications 1 à 10, caractérisé en ce que le bitume de la composante bitume/polymère a une pénétration, déterminée selon la norme NF T 66004, comprise entre 10 et 500.

12. Procédé selon la revendication 11, caractérisé en ce que ladite pénétration est comprise entre 20 et 400.

13. Procédé selon l'une des revendications 1 à 12, caractérisé en ce que le polymère élastomérique présent dans la composante bitume/polymère est un copolymère de styrène et d'un diène conjugué.

14. Procédé selon la revendication 13, caractérisé en ce que ledit copolymère est un copolymère de styrène et d'un diène conjugué choisi parmi butadiène, isoprène, chloroprène, butadiène carboxylé et isoprène carboxylé.

15. Procédé selon la revendication 13 ou 14, caractérisé en ce que le copolymère de styrène et d'un diène conjugué possède une masse moléculaire viscosimétrique moyenne comprise entre 10000 et 600000.

16. Procédé selon la revendication 15, caractérisé en ce que ladite masse moléculaire viscosimétrique moyenne est comprise entre 30 000 et 400 000.

17. Procédé selon l'une des revendications 13 à 16, caractérisé en ce que le copolymère de styrène et d'un diène conjugué renferme 5% à 50% en poids de styrène.

18. Procédé selon l'une des revendications 1 à 17, caractérisé en ce que le système de réticulation donneur de soufre est utilisé en quantité propre à fournir 1 % à 15 % en poids de soufre par rapport au poids du polymère élastomérique apporté par la composante bitume/polymère.

19. Procédé selon l'une des revendications 1 à 18, caractérisé en ce que la composante bitume/polymère résulte d'un simple mélange du bitume et de la quantité appropriée du polymère élastomérique.

20. Procédé selon l'une des revendications 1 à 18, caractérisé en ce que la composante bitume/polymère est obtenue en mélangeant tout d'abord le polymère élastomérique avec le bitume, puis en incorporant audit mélange un système de vulcanisation donneur de soufre en quantité propre à fournir une quantité de soufre élémentaire ou radicalaire représentant 0,5% à 10% du poids du polymère utilisé pour produire la composante bitume/polymère et en maintenant le tout sous agitation à une température comprise entre 100°C et 230°C pendant une durée suffisante pour obtenir une composante bitume/polymère ayant la viscosité désirée et pour laquelle le polymère élastomérique est couplé au bitume.

21. Procédé selon la revendication 19 ou 20, caractérisé en ce que la composante bitume/polymère renferme un agent fluxant en quantité représentant 1 à 40% en poids du bitume.

22. Procédé selon la revendication 21, caractérisé en ce que la quantité d'agent fluxant représente 2 à 20 % en poid du bitume.

23. Procédé selon la revendication 21 ou 22, caractérisé en ce que ledit agent fluxant consiste en une huile hydrocarbonée présentant un intervalle de distillation à pression atmosphérique, déterminé selon la norme ASTM D 86-67, compris entre 100°C et 450°C.

24. Procédé selon la revendication 23, caractérisé en ce que ledit intervalle de distillation est compris entre 150°C et 380°C.

25. Procédé selon l'une des revendications 1 à 18, caractérisé en ce que la composante bitume/polymère est obtenue en ajoutant au bitume, maintenu entre 100°C et 230°C, une solution mère du polymère et d'un système de vulcanisation donneur de soufre dans un agent fluxant et en maintenant le mélange résultant sous agitation à une température comprise entre 100°C et 230°C pendant une durée suffisante pour obtenir un produit fluide ayant la viscosité désirée, la quantité de système de vulcanisation présent dans la solution mère étant propre à fournir une quantité de soufre représentant 0,5 à 10% du poids du polymère présent dans la solution mère.

26. Procédé selon la revendication 25, caractérisé en ce que l'agent fluxant consiste en une huile hydrocarbonée ayant un intervalle de distillation à pression atmosphérique, déterminé selon la norme ASTM D 86-67, compris entre 100°C et 450°C.

27. Procédé selon la revendication 20, 25 ou 26, caractérisé en ce que le système de vulcanisation donneur de soufre est du même type que le système de réticulation donneur de soufre selon la revendication 2.

28. Procédé selon l'une des revendications 1 à 27, caractérisé en ce que dans la formation de l'émulsion, le rapport pondéral de la composante bitume/polymère à la phase aqueuse a une valeur allant de 50:50 à 80:20.

29. Procédé selon l'une des revendications 1 à 28, caractérisé en ce que la température de la phase aqueuse amenée à la zone de formation d'émulsion est comprise entre 20°C et 80°C.

30. Procédé selon l'une des revendications 1 à 29, caractérisé en ce que la phase aqueuse renferme une quantité de système émulsifiant représentant 0,005% à 3% du poids total de l'émulsion.

31. Procédé selon l'une des revendications 1 à 30, caractérisé en ce que le système émulsifiant présent dans la phase aqueuse est formé d'un ou de plusieurs agents émulsifiants cationiques.

32. Procédé selon la revendication 31, caractérisé en ce que ledit système émulsifiant est formé d'un ou de plusieurs agents émulsifiants cationiques azotés.

33. Procédé selon l'une des revendications 1 à 30, caractérisé en ce que le système émulsifiant présent dans la phase aqueuse est formé d'un ou de plusieurs agents émulsifiants anioniques.

34. Procédé selon l'une des revendications 1 à 30, caractérisé en ce que le système émulsifiant présent dans la phase aqueuse est formé d'un ou de plusieurs agents émulsifiants non ioniques.

35. Procédé selon la revendication 31, caractérisé en ce que le pH de la phase aqueuse est ajusté à une valeur comprise entre 1 et 7 par addition d'une quantité appropriée d'un acide.

36. Procédé selon l'une des revendications 1 à 35, caractérisé en ce que, outre le système émulsifiant et éventuellement un acide ou autre agent régulateur du pH, la phase aqueuse renferme des additifs, des agents d'adhésivité, ou encore des agents épaississants.

37. Procédé selon l'une des revendications 1 à 36, caractérisé en ce que la composante bitume/polymère renferme des promoteurs d'adhésion du liant bitume/polymère final aux surfaces minérales.

38. Application de l'émulsion de liant bitume/polymère obtenue par le procédé selon l'une des revendications 1 à 37, à la réalisation de revêtements routiers, à la production d'enrobés, mis en place à chaud ou à froid, et à la réalisation de revêtements d'étanchéité.

39. Application selon la revendication 38, caractérisée en ce que les revêtements routiers sont des revêtements du type enduit superficiel.

## Claims

1. Method for preparing a bitumen/polymer binder with a continuous three-dimensional polymer structure in an aqueous emulsion, into which there is introduced in an emulsion formation area (i) a bitumen/polymer component consisting of a bitumen which contains 0.5% to 15% by weight of bitumen, of an elastomer polymer which is cross-linkable with sulphur, and (ii) an aqueous phase which contains an effective quantity of an emulsifying system, the ratio by weight of the bitumen/polymer component to the aqueous phase ranging from 30:70 to 85:15, and the medium which contains (i) and (ii) is maintained in the emulsion formation area until an emulsion is formed, the said method being characterised in that the bitumen/polymer component is introduced into the emulsion formation area in the molten mass state at a temperature of between 100°C and 230°C, and which has viscosity of 2 Pa.s at the most at the said temperature, whereas the aqueous phase has a temperature of between 10°C and 90°C; in that there is also introduced into the emulsion formation area (iii) a cross-linking system which supplies sulphur in a quantity suitable for providing 0.5 to 20% by weight of sulphur relative to the weight of elastomer polymer provided by the bitumen/polymer component; and in that the reactive medium formed by the components (i), (ii) and (iii) is maintained in the said area at an appropriate temperature of between 50°C and 160°C until a bitumen/polymer binder emulsion is obtained, in which the polymer of the said binder is at least partially cross-linked in a three-dimensional structure.

2. Method according to Claim 1, characterised in that the cross-linking system which provides sulphur consists of a product selected from amongst elementary sulphur, hydrocarbyl polysulphides, vulcanisation accelerators which provide sulphur, or mixtures of these products with one another and/or with vulcanisation accelerators which do not provide sulphur.

3. Method according to Claim 2, characterised in that firstly there is formed an intimate mixture of the bitumen/polymer component and of the cross-linking system which provides sulphur at a temperature of between 100°C and 230°C, and which is sufficient in order for the said mixture to be in the molten mass state, then substantially immediately after its formation this mixture is brought into contact with the aqueous phase, and the assembly is introduced into the emulsion formation area, either immediately or after predispersion in a premixing area.

4. Method according to either of Claims 2 or 3, characterised in that the emulsion obtained from the emulsion formation area is maintained in a maturing area at a temperature of between 80°C and 160°C for a period of between 15 minutes and 4 hours, so that the reaction of cross-linking by the sulphur, which takes place within the micelles of the bitumen/polymer component in emulsion in the aqueous phase, is complete.

5. Method according to Claim 4, characterised in that the cross-linking system which provides sulphur is free from vulcanisation accelerator, and in that the emulsion is maintained in the maturing area at a temperature of between 100°C and 160°C for a period of between 15 minutes and 2 hours.

6. Method according to Claim 5, characterised in that the emulsion is maintained in the maturing area, at a temperature of between 100°C and 120°C.

7. Method according to Claim 4, characterised in that the cross-linking system which provides sulphur contains a vulcanisation accelerator, and the emulsion is maintained in the maturing area at a temperature of between 80°C and 100°C.

8. Method according to Claim 7, characterised in that the emulsion is maintained in the maturing area at a temperature of between 85°C and 95°C.

9. Method according to any one of Claims 1 to 8, characterised in that the temperature of the bitumen/polymer component in the molten mass state is between 120°C and 180°C.

10. Method according to any one of Claims 1 to 9, characterised in that the bitumen/polymer component has an elastomer polymer content which represents 1 to 10% by weight of the bitumen.

11. Method according to any one of Claims 1 to 10, characterised in that the bitumen of the bitumen/polymer component has penetration of between 10 and 500, determined according to standard NF T 66004.

12. Method according to Claim 11, characterised in that the said penetration is between 20 and 400.

13. Method according to any one of Claims 1 to 12, characterised in that the elastomer polymer present in the bitumen/polymer component, is a copolymer of styrene and a conjugated diene.

14. Method according to Claim 13, characterised in that the said copolymer is a copolymer of styrene and a conjugated diene selected from amongst butadiene, isoprene, chloroprene, carboxylated butadiene and carboxylated isoprene.

15. Method according to either of Claims 13 or 14, characterised in that the copolymer of styrene and a conjugated diene has a mean viscosimetric molecular mass of between 10,000 and 600,000.

16. Method according to Claim 15, characterised in that the said mean viscosimetric molecular mass is between 30,000 and 400,000.

17. Method according to any one of Claims 13 to 16, characterised in that the copolymer of styrene and a conjugated diene contains 5% to 50% by weight of styrene.

18. Method according to any one of Claims 1 to 17, characterised in that the cross-linking system which provides sulphur is used in a quantity suitable for providing 1% to 15% by weight of sulphur, relative to the weight of the elastomer polymer provided by the bitumen/polymer component.

19. Method according to any one of Claims 1 to 18, characterised in that the bitumen/polymer component is obtained from a simple mixture of bitumen and the appropriate quantity of the elastomer polymer.

20. Method according to any one of Claims 1 to 18, characterised in that the bitumen/polymer component is obtained by mixing firstly the elastomer polymer with the bitumen, then by incorporating in the said mixture a vulcanisation system which provides sulphur in a quantity suitable for supplying a quantity of elementary or radical sulphur which represents 0.5% to 10% by weight of the polymer used in order to produce the bitumen/polymer component, the whole being maintained under agitation at a temperature of between 100°C and 230°C for a period of time sufficient to obtain a bitumen/polymer component which has the required viscosity, and for which the elastomer polymer is linked to the bitumen.

21. Method according to either of Claims 19 or 20, characterised in that the bitumen/polymer component contains a fluxing agent in a quantity representing 1 to 40% by weight of the bitumen.

22. Method according to Claim 21, characterised in that the quantity of fluxing agent represents 2 to 20% by weight of the bitumen.

23. Method according to either of Claims 21 or 22, characterised in that the said fluxing agent consists of a hydrocarbon oil which has a distillation range at atmospheric pressure of between 100°C and 450°C, determined in accordance with standard ASTM D 86-67.

24. Method according to Claim 23, characterised in that the said distillation range is between 150°C and 380°C.

25. Method according to any one of Claims 1 to 18, characterised in that the bitumen/polymer component is obtained by adding to the bitumen which is maintained at between 100°C and 230°C, a mother solution of the polymer and of a vulcanisation system which provides sulphur, in a fluxing agent, and by maintaining the resulting mixture under agitation at a temperature of between 100°C and 230°C for a period of time sufficient to obtain a fluid product which has the required viscosity, the quantity of vulcanisation system present in the mother solution being suitable for providing a quantity of sulphur which represents 0.5 to 10% by weight of the polymer present in the mother solution.

26. Method according to Claim 25, characterised in that the fluxing agent consists of a hydrocarbon oil which has a distillation range at atmospheric pressure of between 100°C and 450°C, determined according to standard ASTM D 86-67.

27. Method according to Claims 20, 25 or 26, characterised in that the vulcanisation system which provides sulphur is of the same type as the cross-linking system which provides sulphur according to Claim 2.

28. Method according to any one of Claims 1 to 27, characterised in that in the formation of the emulsion, the weight ratio of the bitumen/polymer component to the aqueous phase has a value ranging from 50:50 to 80:20.

29. Method according to any one of Claims 1 to 28, characterised in that the temperature of the aqueous phase introduced into the emulsion formation area is between 20°C and 80°C.

30. Method according to any one of Claims 1 to 29, characterised in that the aqueous phase contains a quantity of emulsifying system which represents 0.005% to 3% of the total weight of the emulsion.

31. Method according to any one of Claims 1 to 30, characterised in that the emulsifying system present in the aqueous phase consists of one or a plurality of cationic emulsifying agents.

32. Method according to Claim 31, characterised in that the said emulsifying system consists of one or a plurality of nitrogenous cationic emulsifying agents.

33. Method according to any one of Claims 1 to 30, characterised in that the emulsifying system present in the aqueous phase consists of one or a plurality of anionic emulsifying agents.

34. Method according to any one of Claims 1 to 30, characterised in that the emulsifying system present in the aqueous phase consists of one or a plurality of non-ionic emulsifying agents.

35. Method according to Claim 31, characterised in that the pH of the aqueous phase is adjusted to a value of between 1 and 7 by addition of an appropriate quantity of an acid.

36. Method according to any one of Claims 1 to 35, characterised in that, in addition to the emulsifying system and optionally an acid or other pH regulating agent, the aqueous phase contains additives, adhesion agents, or thickening agents.

37. Method according to any one of Claims 1 to 36, characterised in that the bitumen/polymer component contains promoters for adhesion of the final bitumen/polymer binder to mineral surfaces.

38. Application of the bitumen/polymer binder emulsion obtained by means of the method according to any one of Claims 1 to 37 to the production of road surfaces, to the production of surfacing laid in hot or cold conditions, and to the production of waterproof coatings.

39. Application according to Claim 38, characterised in that the road surfaces are of the surface coating type.

## Patentansprüche

1. Verfahren zur Herstellung eines Bitumen-Polymer-Bindemittels mit kontinuierlicher dreidimensionaler Polymerstruktur in wässeriger Emulsion, bei dem man einer Zone der Emulsionsbildung (i) eine Bitumen-Polymer-Komponente, die aus einem Bitumen besteht, das 0,5 bis 15%, bezogen auf das Gewicht des Bitumens, eines mit Schwefel vernetzbaren elastomeren Polymers enthält und (ii) eine wässerige Phase zuführt, die eine wirksame Menge eines Emulgatorsystems enthält, wobei das Gewichtsverhältnis der Bitumen-Polymer-Komponente zur wässerigen Phase 30:70 bis 85:15 beträgt und man das (i) und (ii) enthaltende Medium in der Zone der Emulsionsbildung bis zur Bildung einer Emulsion hält, dadurch **gekennzeichnet,** daß man die Bitumen-Polymer-Komponente der Zone der Emulsionsbildung in Form einer geschmolzenen Masse zuführt, die eine Temperatur zwischen 100 und 230°C aufweist und eine Viskosität bei dieser Temperatur von höchstens 2 Pa.s besitzt, wohingegen die wässerige Phase eine Temperatur zwischen 10 und 90°C aufweist, man außerdem der Zone der Emulsionsbildung (iii) ein schwefelspendendes Vernetzungssystem in einer Menge zuführt, die geeignet ist, 0,5 bis 20 Gew.-% Schwefel, bezogen auf das Gewicht des durch die Bitumen-Polymer-Komponente zugeführten elastomeren Polymers, zu liefern und man das aus den Komponenten (i), (ii) und (iii) gebildete Reaktionsmedium in dieser Zone bei einer geeigneten Temperatur zwischen 50 und 160°C so lange hält, bis man eine Emulsion des Bitumen-Polymer-Bindemittels erhält, in der das Polymer des Bindemittels wenigstens teilweise in Form einer dreidimensionalen Struktur vernetzt ist.

2. Verfahren nach Anspruch 1, dadurch **gekennzeichnet,** daß das schwefelspendende Vernetzungssystem in einem Produkt besteht, ausgewählt unter elementarem Schwefel, Kohlenwasserstoffpolysulfiden, schwefelspendenden Vulkanisationsbeschleunigern, Gemischen dieser Produkte untereinander und/oder mit nicht schwefelspendenden Vulkanisationsbeschleunigern.

3. Verfahren nach Anspruch 2, dadurch **gekennzeichnet,** daß man zuerst ein inniges Gemisch aus der Bitumen-Polymer-Komponente und dem schwefelspendenden Vernetzungssystem bei einer Temperatur zwischen 100 und 230°C bildet, die ausreicht, damit das Gemisch die Form einer geschmolzenen Masse hat, dann dieses Gemisch praktisch unmittelbar nach seiner Bildung mit der wässerigen Phase in Berührung bringt und das Ganze dann unmittelbar danach oder nach Vordispergierung in einer Vormischungszone der Zone der Emulsionsbildung zuführt.

4. Verfahren nach Anspruch 2 oder 3, dadurch **gekennzeichnet,** daß die die Zone der Emulsionsbildung verlassende Emulsion in einer Reifungszone bei einer Temperatur zwischen 80 und 160°C und während einer Zeitdauer zwischen 15 Minuten und 4 Stunden gehalten wird, um die Reaktion der Vernetzung durch den Schwefel, die im Inneren der Mizellen der Bitumen-Polymer-Komponente in der Emulsion in der wässerigen Phase stattfindet, zu Ende zu führen.

5. Verfahren nach Anspruch 4, dadurch **gekennzeichnet,** daß das schwefelspendende Vernetzungssystem keinen Vulkanisationsbeschleuniger enthält und die Emulsion in der Reifungszone bei einer Temperatur zwischen 100 und 160°C während 15 Minuten bis 2 Stunden gehalten wird.

6. Verfahren nach Anspruch 5, dadurch **gekennzeichnet,** daß die Emulsion in der Reifungszone bei einer Temperatur zwischen 100 und 120°C gehalten wird.

7. Verfahren nach Anspruch 4, dadurch **gekennzeichnet,** daß das schwefelspendende Vernetzungssystem einen Vulkanisationsbeschleuniger enthält und die Emulsion in der Reifungszone bei einer Temperatur zwischen 80 und 100°C gehalten wird.

8. Verfahren nach Anspruch 7, dadurch **gekennzeichnet,** daß die Emulsion in der Reifungszone bei einer Temperatur zwischen 85 und 95°C gehalten wird.

9. Verfahren nach einem der Ansprüche 1 bis 8, dadurch **gekennzeichnet,** daß die Temperatur der Bitumen-Polymer-Komponente in der Form einer geschmolzenen Masse zwischen 120 und 180°C beträgt.

10. Verfahren nach einem der Ansprüche 1 bis 9, dadurch **gekennzeichnet,** daß die Bitumen-Polymer-Komponente 1 bis 10% elastomeres Polymer, bezogen auf das Gewicht des Bitumens, enthält.

11. Verfahren nach einem der Ansprüche 1 bis 10, dadurch **gekennzeichnet,** daß das Bitumen der Bitumen-Polymer-Komponente eine Penetrationszahl, ermittelt nach der Norm NF T 66004, zwischen 10 und 500 aufweist.

12. Verfahren nach Anspruch 11, dadurch **gekennzeichnet,** daß die Penetrationszahl zwischen 20 und 400 liegt.

13. Verfahren nach einem der Ansprüche 1 bis 12, dadurch **gekennzeichnet,** daß das elastomere Polymer in der Bitumen-Polymer-Komponente ein Copolymer aus Styrol und einem konjugierten Dien ist.

14. Verfahren nach Anspruch 13, dadurch **gekennzeichnet,** daß das Copolymer ein Copolymer ist aus Styrol und einem konjugierten Dien, ausgewählt unter Butadien, Isopren, Chloropren, carboxyliertem Butadien und carboxyliertem Isopren.

15. Verfahren nach Anspruch 13 oder 14, dadurch **gekennzeichnet,** daß das Copolymer aus Styrol und einem konjugierten Dien eine viskosimetrische Durchschnittsmolekularmasse zwischen 10.000 und 600.000 aufweist.

16. Verfahren nach Anspruch 15, dadurch **gekennzeichnet,** daß die viskosimetrische Durchschnittsmolekularmasse zwischen 30.000 und 400.000 liegt.

17. Verfahren nach einem der Ansprüche 13 bis 16, dadurch **gekennzeichnet,** daß das Copolymer aus Styrol und einem konjugierten Dien 5 bis 50 Gew.-% Styrol enthält.

18. Verfahren nach einem der Ansprüche 1 bis 17, dadurch **gekennzeichnet,** daß das schwefelspendende Vernetzungssystem in einer Menge verwendet wird, die geeignet ist, bezogen auf das Gewicht des durch die Bitumen-Polymer-Komponente zugeführten elastomeren Polymers, 1 bis 15 Gew.-% Schwefel zu liefern.

19. Verfahren nach einem der Ansprüche 1 bis 18, dadurch **gekennzeichnet,** daß sich die-Bitumen-Polymer-Komponente aus einer einfachen Mischung des Bitumens mit einer geeigneten Menge des elastomeren Polymers ergibt.

20. Verfahren nach einem der Ansprüche 1 bis 18, dadurch **gekennzeichnet,** daß die Bitumen-Polymer-Komponente dadurch erhalten wird, daß man zuerst das elastomere Polymer mit dem Bitumen mischt, dann in dieses Gemisch ein schwefelspendendes Vulkanisationssystem in einer Menge einarbeitet, die geeignet ist, eine Menge an elementarem oder aktivem Schwefel von 0,5 bis 10%, bezogen auf das Gewicht des zur Herstellung der Bitumen-Polymer-Komponente verwendeten Polymers, zu liefern und man dann das Ganze unter Rühren bei einer Temperatur zwischen 100 und 230°C während einer Zeitdauer hält, die ausreicht, um eine Bitumen-Polymer-Komponente mit der gewünschten Viskosität zu erzielen, und während der das elastomere Polymer mit dem Bitumen gekuppelt wird.

21. Verfahren nach Anspruch 19 oder 20, dadurch **gekennzeichnet,** daß die Bitumen-Polymer-Komponente ein Verflüssigungsmittel in einer Menge von 1 bis 40%, bezogen auf das Gewicht des Bitumens, enthält.

22. Verfahren nach Anspruch 21, dadurch **gekennzeichnet,** daß die Menge des Verflüssigungsmittels 2 bis 20%, bezogen auf das Gewicht des Bitumens, beträgt.

23. Verfahren nach Anspruch 21 oder 22, dadurch **gekennzeichnet,** daß das Verflüssungsmittel aus einem Kohlenwasserstofföl mit einem Destillationsbereich bei Atmosphärendruck, ermittelt gemäß der ASTM-Norm D 86-67, zwischen 100 und 450°C besteht.

24. Verfahren nach Anspruch 23, dadurch **gekennzeichnet,** daß der Destillationsbereich zwischen 150 und 380°C liegt.

25. Verfahren nach einem der Ansprüche 1 bis 18, dadurch **gekennzeichnet,** daß die Bitumen-Polymer-Komponente dadurch erhalten wird, daß man dem zwischen 100 und 230°C gehaltenen Bitumen eine Mutterlauge des Polymers und eines schwefelspendenden Vulkanisationssystems in einem Verflüssigungsmittel zusetzt und das erhaltene Gemisch unter Rühren bei einer Temperatur zwischen 100 und 230°C während einer Zeitdauer hält, die ausreicht, um ein flüssiges Produkt mit der gewünschten Viskosität zu erzielen, wobei die Menge des Vulkanisationssystems in der Mutterlauge geeignet ist, eine Schwefelmenge von 0,5 bis 10%, bezogen auf das Gewicht des in der Mutterlauge enthaltenen Polymers, zu liefern.

26. Verfahren nach Anspruch 25, dadurch **gekennzeichnet,** daß das Verflüssigungsmittel aus einem Kohlenwasserstofföl mit einem Destillationsbereich bei Atmosphärendruck, ermittelt nach ASTM D 86-67, zwischen 100 und 450°C besteht.

27. Verfahren nach Anspruch 20, 25 oder 26, dadurch **gekennzeichnet,** daß das schwefelspendende Vulkanisationssystem vom selben Typ ist wie das schwefelspendende Vernetzungsystem nach Anspruch 2.

28. Verfahren nach einem der Ansprüche 1 bis 27, dadurch **gekennzeichnet,** daß bei der Bildung der Emulsion das Gewichtsverhältnis der Bitumen-Polymer-Komponente zur wässerigen Phase einen Wert von 50:50 bis 80:20 aufweist.

29. Verfahren nach einem der Ansprüche 1 bis 28, dadurch **gekennzeichnet,** daß die Temperatur der der Zone der Emulsionsbildung zugeführten wässerigen Phase zwischen 20 und 80°C liegt.

30. Verfahren nach einem der Ansprüche 1 bis 29, dadurch **gekennzeichnet,** daß die wässerige Phase das Emulgatorsystem in einer Menge von 0,005 bis 3%, bezogen auf das Gesamtgewicht der Emulsion, enthält.

31. Verfahren nach einem der Ansprüche 1 bis 30, dadurch **gekennzeichnet,** daß das Emulgatorsystem in der wässerigen Phase aus einem oder mehreren kationischen Emulgatoren gebildet ist.

32. Verfahren nach Anspruch 31, dadurch **gekennzeichnet,** daß das Emulgatorsystem aus einem oder mehreren stickstoffhaltigen kationischen Emulgatoren gebildet ist.

33. Verfahren nach einem der Ansprüche 1 bis 30, dadurch **gekennzeichnet,** daß das Emulgatorsystem in der wässerigen Phase aus einem oder mehreren anionischen Emulgatoren gebildet ist.

34. Verfahren nach einem der Ansprüche 1 bis 30, dadurch **gekennzeichnet,** daß das Emulgatorsystem in der wässerigen Phase aus einem oder mehreren nichtionischen Emulgatoren gebildet ist.

35. Verfahren nach Anspruch 31, dadurch **gekennzeichnet,** daß der pH der wässerigen Phase durch Zugabe einer geeigneten Säuremenge auf einen Wert zwischen 1 und 7 eingestellt wird.

36. Verfahren nach einom der Ansprüche 1 bis 35, dadurch **gekennzeichnet,** daß die wässerige Phase neben dem Emulgatorsystem und gegebenenfalls einer Säure oder einem anderen Mittel zur Einstellung des pH auch noch Zusätze, Haftmittel oder auch Verdickungsmittel enthält.

37. Verfahren nach einem dor Ansprüche 1 bis 36, dadurch **gekennzeichnet,** daß die Bitumen-Polymere-Komponente Mittel zur Verbesserung der Haftung des als Endprodukt erhaltenen Bitumen-Polymer-Bindemittels auf minerglisohen Oberflächen enthält.

38. Verwendung der nach dem Verfahren nach einem der Ansprüche 1 bis 37 erhaltenen Emulsion des Bitumen-Polymer-Bindemittels zur Herstellung von Straßenbelägen, im warmen oder kalten Zustand aufgebrachten Straßendecken sowie zur Herstellung von Dichtungsschürzen.

39. Verwendung nach Anspruch 38, dadurch **gekennzeichnet,** daß die Straßenbeläge oberflächliche Straßenbeläge sind.
